# EUROPÄISCHE PATENTSCHRIFT

(11) **EP 3 316 994 B1**
(45) Veröffentlichungstag und Bekanntmachung des Hinweises auf die Patenterteilung: **07.08.2019**
(21) Anmeldenummer: 16734312.8
(22) Anmeldetag: 29.06.2016
(51) Int. Cl.: B01D 61/00, B01D 61/36

(54) **OSMOTISCHES DESTILLATIONSVERFAHREN ZUM KONZENTRIEREN EINER KOCHSALZHALTIGEN FLÜSSIGKEIT**
OSMOTIC DISTILLATION METHOD FOR CONCENTRATING A LIQUID CONTAINING COOKING SALT
PROCEDE DE DISTILLATION OSMOTIQUE DESTINE A CONCENTRER UN LIQUIDE SALIN

(30) Priorität: 01.07.2015 EP 15174857
(43) Veröffentlichungstag der Anmeldung: 09.05.2018
(73) Patentinhaber: Covestro Deutschland AG, 51373 Leverkusen (DE)
(72) Erfinder: BULAN, Andreas, 40764 Langenfeld (DE); SCHIESSER, Yuliya, 63844 Troisdorf (DE); WEBER, Rainer, 51519 Odenthal (DE)
(74) Vertreter: Levpat
(86) Internationale Anmeldenummer: PCT/EP2016/065195
(87) Internationale Veröffentlichungsnummer: WO 2017/001513

(56) Entgegenhaltungen:
- WO-A1-2013/074040
- DE-A1-102009 023 940
- ABDULLAH ALKHUDHIRI ET AL: "Membrane distillation: A comprehensive review", DESALINATION, Bd. 287, 1. Februar 2012 (2012-02-01), Seiten 2-18, XP055130710, ISSN: 0011-9164, DOI: 10.1016/j.desal.2011.08.027

## Beschreibung

Die Erfindung betrifft ein osmotisches Destillationsverfahren zum Konzentrieren einer kochsalzhaltigen Flüssigkeit. Die Erfindung betrifft insbesondere ein Aufarbeitungsverfahren für kochsalzhaltiges Reaktionsabwasser erhalten aus der Produktion von Polymeren.

Die Erfindung geht aus von an sich bekannten osmotischen Destillationsverfahren, die üblicherweise den Übergang von Wasser aus einer beispielsweise kochsalzhaltigen Flüssigkeit durch eine Membran in eine Zuglösung vorsehen.

Bei der klassischen Osmotischen Destillation (OD) nach dem Direktkontaktprinzip wird ein Flüssigkeitsgemisch (Feed) mit einer flüchtigen Komponente durch eine mikroporöse, nicht von der Flüssigkeit benetzbare Membran von einer zweiten flüssigen Phase (Zuglösung) getrennt, die die flüchtige Komponente absorbieren kann. Das Kernstück der bekannten OD ist die hydrophobe Membran. Wässrige Lösungen können die Membran nicht benetzen, sie können aber an der Membranoberfläche (Feedseite) Wasserdampf abgeben, der durch die Poren der Membran permeiert und auf der Zuglösungsseite der Membran kondensiert. Die treibende Kraft der OD ist die Dampfdruckdifferenz zwischen dem jeweiligen Dampfdruck über der Feed- und der Zuglösung. Die Membran dient dabei als eine Barriere zur Phasentrennung.

Die OD benötigt als solche keine zusätzliche Wärme oder die Anwendung einer Druckdifferenz als treibende Kraft und eignet sich somit im Allgemeinen zur Aufkonzentrierung von wässrigen Lösungen und insbesondere von empfindlichen Produkten aus der Lebensmittel-, Chemie- und Pharmaindustrie.

Die bis jetzt für OD erforschten und/oder verwendeten Module nutzen alle ausschließlich das Prinzip des direkten Kontakts der beiden Fluide (Feed- und Zuglösung) mit einer Membran.

Ansätze zur Nutzung von NaCl-haltigen Prozessabwässern für die Elektrolyse sind zwar grundsätzlich bekannt. Die für die Chlor-Elektrolyse benötigte NaCl-Konzentration wird aber durch Lösen frischen Salzes in dem gereinigten Prozessabwasser erreicht. Auf diese Weise kann allerdings nur ein Teil des gesamten Abwassers aufgrund der Wasserbilanz der Elektrolyse recycelt werden.

Um das gesamte Abwasser recyceln zu können, ist eine Aufkonzentrierung notwendig. Diese kann z. B. durch thermische Eindampfung (WO/2001/38419) erfolgen. Weiterhin sind folgende Methoden zur Erhöhung der NaCl-Konzentration bekannt: 1) Energie der Mikrowelle (US 4267026); 2) Kombination aus Ausfrieren, Zentrifugieren und Umkehrosmose (US 4592768); 3) Kristallisation der Hydrate (US 3655333). Alle diese Verfahren sind jedoch energieintensiv und kostspielig.

Die Nutzung von NaOH als Zuglösung ist zwar grundsätzlich aus dem Stand der Technik bekannt (siehe WO/2005/118114). Dabei handelt es sich jedoch um die Verwendung der OD zur Aufkonzentrierung von NaCl-Sole im Anolytkreislauf. Dort finden MicroZa® und Gore-Tex® tubulare Mikrofiltrationsmodule als Kontaktoren nach dem Direktkontaktprinzip Anwendung. Ein schwerwiegendes Problem des bekannten OD-Verfahrens nach dem Direktkontaktprinzip ist jedoch die Kontamination der Zuglösung mit NaCl.

Ein weiteres Hindernis in der Verwendung von kochsalzhaltigem Prozesswasser zur bekannten OD-Verfahren besteht noch in der Belastung der Lösung mit organischen Verunreinigungen. Es ist zwar denkbar die organischen Verunreinigungen mittels z.B. Aktivkohle zu entfernen.

Ein Teil der Verunreinigungen verbleibt aber dennoch in Konzentration im ppm-Bereich in den Abwässern. Diese Verunreinigungen führen zur Entstehung und zum Wachstum von hydrophilen "Hot-Spots" an der hydrophoben Membran während des Betriebs, welche dort eine Benetzung der Membran und somit den **Durchbruch der Lösungen durch die Membran** zur Folge hat. Dieses Phänomen führt schließlich zu dem unerwünschten Effekt der Kontamination der NaOH-Lösung.

Die Nachteile der aus dem Stand der Technik bekannten Osmotischen Destillation nach dem Direktkontaktprinzip sind zusammengefasst:
- Entstehung und Wachstum von hydrophilen Stellen an der hydrophoben Membran während des Betriebs aufgrund der in der Feedlösung vorhandenen benetzenden Substanzen oder Auskristallisierung der Salze, welche zum Durchbruch der Lösungen durch die Membran führt.
- Gegenseitige Kontamination der Fluidströme bei Benetzung oder Undichtigkeit der Membran.

Die Aufgabe der vorliegenden Erfindung besteht darin, ein osmotisches Destillationsverfahren zum Konzentrieren einer kochsalzhaltigen Flüssigkeit bereitzustellen, das die vorstehend beschriebenen Nachteile der aus dem Stand der Technik bekannten Verfahren zur osmotischen Destillation überwindet und insbesondere eine betriebssichere Konzentrierung von kochsalzhaltigen wässrigen Lösungen bzw. Verdünnung der Zuglösung ermöglicht.

Gegenstand der Erfindung ist ein osmotisches Destillationsverfahren zum Konzentrieren einer kochsalzhaltigen wässrigen Flüssigkeit, wobei die Flüssigkeit eine Konzentration von bis zu 20 Gew.-% Kochsalz, bevorzugt 2 bis 18 Gew.-% Kochsalz aufweist, das wenigstens die folgenden Schritte aufweist,
a) gegebenenfalls Vorreinigung der Flüssigkeit von organischen Nebenbestandteilen ( insbesondere Phenol, Bisphenol A, Isopropylphenol, Butylphenol, Chlorbenzol, Dichlormethan, Ethylpiperidin und andere), insbesondere bis zu einem Gesamtgehalt der organischen Nebenbestandteile von 20 ppm, insbesondere bevorzugt bezüglich des Gehalts an Ethylpiperidin bis zu einem Gehalt von Ethylpiperidin von maximal 5 ppm.
b) Einleitung der gereinigten Flüssigkeit in eine erste Zone (Verdampfungszone), die von einer an diese erste Zone angrenzenden Diffusionszone durch eine wasserdampfdurchlässige hydrophobe erste Membran getrennt ist,
c) Diffusion von Wasserdampf aus der kochsalzhaltigen Flüssigkeit durch die Membrane in die Diffusionszone,
d) weitere Diffusion von Wasserdampf aus der Diffusionszone durch eine zweite wasserdampfdurchlässige hydrophobe Membran in eine an die Diffusionszone angrenzende Strippzone und Aufnahme des Wasserdampf in eine Zuglösung, die in der Strippzone kontinuierlich ausgetauscht wird.

Als Zuglösung können beliebige Lösungen mit hohem osmotischem Druck, insbesondere wässrige Lösungen von Alkalihydroxiden, insbesondere von NaOH, oder von NaCl, CaCl₂, MgCl₂, Polyglykole etc. verwendet werden. Als besonders bevorzugte Zuglösung hat sich eine wässrige Lösung von NaOH erwiesen.

Eine bevorzugte Variante des neuen Verfahrens ist somit dadurch gekennzeichnet, dass als Zuglösung eine konzentrierte Alkalilauge, insbesondere konzentrierte Natronlauge eingesetzt wird.

Besonders bevorzugt wird eine Zuglösung mit einer Konzentration an Alkalihydroxid, besonders bevorzugt an NaOH, von 10 Gew.-% bis 50 Gew.-%, ganz besonders bevorzugt von 15 Gew.-% bis 35 Gew.-%, insbesondere besonders bevorzugt 20 Gew.-% bis 33 Gew.-% eingesetzt.

Ein Vorteil der Verwendung von Natronlauge besteht darin, dass ein eventuell anfallendes Gemisch von Natronlauge und Kochsalz sich eventuell einfach zu Kochsalz recyclieren lässt, das weiterverwendet werden kann.

In einer bevorzugten Variante des neuen Verfahrens wird nämlich eine Diffusionszone angewendet, die eine Dränage zur Abführung von Flüssigkeit aufweist und Kondensat, insbesondere mit störenden Anionen, insbesondere bevorzugt mit störenden Chloridanionen belastetem Kondensat oder von gegebenenfalls durch die Membran in die Diffusionszone durchtretende Flüssigkeit oder durchtretende Zuglösung abgeführt wird. Das Kondensat kann abgelassen werden um zum Beispiel eine Kontamination der Zuglösung (z.B. im Falle von Natronlauge) mit Chloridanionen zu vermeiden. Bei Belastungen mit einem Gehalt von mehr als 100 ppm Chloridionen in der Natronlauge kann es zu verstärkter Korrosion der produktberührten Vorrichtungsteile kommen.

In dem neuen Verfahren wird bevorzugt als kochsalzhaltige wässrige Flüssigkeit ein Produktionsabwasser aus einem Verfahren zur Herstellung von Polymeren, insbesondere zur Herstellung von Polycarbonaten oder von Polyurethanvorprodukten verwendet.

Nachfolgend werden beispielhaft aus dem Stand der Technik bekannte Prozesslösungen genannt die für die Anwendung des neuen Verfahrens speziell zum Einsatz kommen können:
Natriumchlorid-haltige Reaktionsabwasserlösung anfallend bei der Herstellung von Polycarbonat wie beispielhaft in EP2286898 A1 beschrieben;
Natriumchlorid-haltige Reaktionsabwasserlösung anfallend bei der Herstellung von Diarylcarbonat wie beispielhaft in EP2241550A1 beschrieben;
Alkalichlorid-haltige Lösung anfallend bei der Synthese von Di- und Polyaminen der Diphenylmethanreihe zur Herstellung von Methylen-diphenyl-diisocyanaten wie beispielhaft in DE102008012037A1 beschrieben.

In einer bevorzugte Ausführung des neuen Verfahrens werden als Material für die erste und die zweite Membran unabhängig voneinander auf einem hydrophoben Polymeren basierende Materialien verwendet, insbesondere Materialien auf Basis von Polypropylen und /oder von Polytetraflourethylen (PTFE). Besonders bevorzugt werden Membranen aus PTFE eingesetzt.

Derzeit werden nur poröse Membranen in der aus dem Stand der Technik bekannten Osmotischen Destillation verwendet. Die am häufigsten verwendeten Membranen sind Flach-, Hohlfaser- und Kapillarmembranen. Die Porengröße, die für OD-Membranen benötigt wird, beträgt üblicherweise etwa 10 nm bis 1 µm. Eine optimale Porengröße muss für jede einzelne Anwendung in Abhängigkeit von der Art der Feedlösung bestimmt und den folgenden Anforderungen gerecht werden: 1) Die Membranporen müssen groß genug sein, um den erforderlichen Flux zu ermöglichen. 2) Die Membranporen müssen klein genug sein, um das Eindringen von Flüssigkeit unter den vorgesehenen Betriebsbedingungen zu verhindern.

Der Bereich der maximalen Porengröße, die eine Benetzung der Membranporen durch die Feedlösung vermeidet, liegt zwischen 0,1 und 0,6 µm. Für Membranen, die für die OD angewandt werden, ist jedoch die Porengrößenverteilung der aussagekräftigere Parameter, da keine einheitliche Porengröße existiert.

Bevorzugt wird daher für das neue Verfahren eine Membran mit einer möglichst engen Porengrößenverteilung der OD-Membran eingesetzt.

Wie auch bei anderen Membranprozessen ist die Membrandicke umgekehrt proportional zum Stoff- und auch zum Wärmetransport, weil sie für beide Transportvorgänge einen Widerstand darstellt, der mit der Dicke der Membran ansteigt.

Grundsätzlich ist auch die Anwendung anderer Membranmaterialien, die aus dem Stand der Technik bekannt sind für die Durchführung des neuen Verfahrens grundsätzlich geeignet.

In den vergangenen Jahren wurden beispielsweise keramische, Kohlenstoffnanoröhrchenhaltige und metallische Membranen untersucht. In den Anfängen der OD wurden Nylonfasern und mit Silikon beschichtete Glasfasern auch als OD-Membranen getestet.

Die Verwendung dünner, nicht poröser (dichter) hydrophoben Kompositmembranen für OD sind beispielsweise in der DE60025256T2 beschrieben. Die beschriebenen Polymermaterialien sind Polytrimethylsilylpropin (PTMSP) und Perfluor-2,2-dimethyl-1,3-dioxol (Teflon AF).

Aufgrund des Kontakts mit insbesondere Alkalilauge sind folglich die inerten Materialien Polytetraflourethylen (PTFE) und Polypropylen (PP) besonders als Membranmaterial geeignet.

Die am häufigsten für die bekannten OD-Verfahren untersuchten Membranen sind Flachmembranen, die als Plattenmodul (Plate and Frame Module) zum Einsatz kommen. Diese Bauform wird auch für die Durchführung des neuen Verfahrens bevorzugt eingesetzt. Aufgrund der besonders einfachen Handhabung, der Vielseitigkeit durch die Austauschmöglichkeit der Membranen (z.B. bei Defekten), der einfachen Konstruktion, Installation und Wartung, bietet dieser modulare Aufbau deutliche Vorteile. Die Verwendung der Plattenmodule bietet außerdem in Hinsicht auf die Handhabung hochviskoser Flüssigkeiten Vorteile. Des Weiteren werden in den Plattenmodulen dünnere Membranen eingebaut als in Kapillarmodulen, was sich günstig auf den Stofftransport auswirkt.

Zur Umsetzung des neuen OD-Verfahrens eignen sich bevorzugt PP-Kunststoffrahmen. Diese Rahmen enthalten Öffnungen verschiedener Größen, die insbesondere nach einem Reibschweißprozess zu Strömungskanälen für verschiedene Fluide werden. Die Kanäle bieten, je nach Rahmenkonfiguration, Zugang zum Innenvolumen eines Rahmens oder zum Volumen zwischen zwei Rahmen. Wird zusätzlich eine Folie oder eine Membran auf einen Rahmen gesiegelt, so können Strömungskanäle mit großen Flächen für Wärme- und Stoffübergang geschaffen werden. Werden die Hauptbehandlungszonen unter Unterdruck gestellt, so werden die Blöcke durch den Atmosphärendruck zusammengepresst und fest verbunden. Sind Öffnungen in den Platten, die die einzelnen Blocke abschließen, vorgesehen, so können die Strömungskanäle zweier Blöcke intern und ohne weiteren Verrohrungsaufwand miteinander verbunden werden. Die Verwendung reibgeschweißter Module ohne Einsatz von Klebstoffen und Dichtungsmaterialien bietet Vorteile beim Einsatz von Natronlauge als Zuglösung.

Im weiteren aus dem Stand der Technik grundsätzlich bekannten sogenannten Spiralwickelmodul (Spiral Wound Module) wird ebenfalls eine Flachmembran eingesetzt. Für die OD kommt diese Modulgeometrie aufgrund der erhöhten Foulingtendenz jedoch seltener zur Anwendung und ist daher weniger bevorzugt im neuen Verfahren einzusetzen.

In der Kategorie der rohrförmigen Membranmodule existieren für die konventionelle OD sowohl Rohr- und Hohlfaser-, als auch Kapillarmodule (siehe z.B.: US4781837 A, WO9717128 A1, WO 2001012304 A1, WO2005118114 A1). Die höchste Packungsdichte bieten die Hohlfasermodule mit 3000 m²/m³. Durch kleine Membrandurchmesser von 50 bis 500 µm verschmutzen sie jedoch leichter und neigen stärker zum Fouling. Vorteile, wie eine hohe Druckstabilität, eine kostengünstige Produktion und ein geringer Platzbedarf verleihen ihnen dennoch ein hohes kommerzielles Potential und machen sie nach den Plattenmodulen zu den am häufigsten verwendeten OD-Membranmodulen. Für die Anwendung des neuen Verfahrens kommen sie gegebenenfalls in Frage.

Das neue OD-Verfahren wird gewöhnlich unter Umgebungsdruck durchgeführt. In einer bevorzugten Ausführungsform beträgt der Druck in den verschiedenen Zonen (Verdampfungszone, Diffusionszone, Strippzone) jedoch unabhängig voneinander weniger als der Umgebungsdruck, besonders bevorzugt von 10 bis 600 mbar.

Das Verfahren wird gewöhnlich bei Raumtemperatur in den verschiedenen Zonen (Verdampfungszone, Diffusionszone, Strippzone) durchgeführt. Bevorzugt ist eine Ausführung, bei der die verschiedenen Zonen (Verdampfungszone, Diffusionszone, Strippzone) unabhängig voneinander bei einer Temperatur von 10 bis 80°C besonders bevorzugt von 20 bis 60°C gehalten werden.

Ein besonders bevorzugtes Verfahren ist jedoch dadurch gekennzeichnet, dass die Temperatur in der Verdampfungszone größer ist als in den an die Verdampfungszone angrenzenden Zonen, der Diffusionszone und der Strippzone. Diese Variante hat den Vorteil, dass eine höhere Dampfdruckdifferenz zu einer höheren Verdampfungsrate führt

Eine vorteilhafte Variante des neuen Verfahrens besteht darin, dass die kochsalzhaltige Flüssigkeit in der Verdampfungszone und die Zuglösung in der Stripzone zueinander im Gegenstrom an den jeweiligen Membranen vorbeigeführt werden. Diese Variante bringt den Vorteil einer konstanten Dampfdruckdifferenz zwischen Abgabe- und Aufnahmelösung.

Die Effektivität des neuen Verfahrens lässt sich in einer bevorzugten Ausführung weiter steigern, wenn die kochsalzhaltige wässrige Flüssigkeit im Bereich der Verdampfungszone turbulent strömt.

Wie oben beschrieben wird als kochsalzhaltige wässrige Flüssigkeit beispielsweise ein kochsalzhaltiges Produktionsabwasser aus einer Polymerproduktion verwendet.

Eine besondere Ausführung des neuen Verfahrens ist demnach dadurch gekennzeichnet, dass als Zuglösung Alkalilauge verwendet wird, die aus einem gekoppelten Elektrolyseprozess zur Elektrolyse von Alkalichlorid entnommen wird und nach Aufnahme des Wasserdampfs in der Strippzone in einen gekoppelten chemischen Produktionsprozess, insbesondere zur Herstellung von Polymeren abgegeben wird.

Vorteilhaft ist auch eine andere Ausführung des neuen Verfahrens, das dadurch gekennzeichnet ist, dass die kochsalzhaltige wässrige Flüssigkeit aus einem gekoppelten chemischen Produktionsprozess, insbesondere einem Prozess zur Herstellung von Polymeren entnommen wird und nach Aufkonzentrierung in der Verdampfungszone in einen gekoppelten Elektrolyseprozess zur Elektrolyse von Alkalichlorid abgegeben wird. Hierbei kann es insbesondere erforderlich sein die im Zuge der Aufkonzentration ebenfalls angereicherten organischen Nebenbestandteile mittels grundsätzlich bekannter Trennverfahren von der Salzlösung abzutrennen, bevor diese der Elektrolyse zugeführt wird.

In einer ganz besonders bevorzugten Ausführung werden die beiden vorgenannten verschiedenen Kopplungsvarianten miteinander kombiniert.

Die Verfahrensschritte b), c) und d) werden in einer bevorzugten Variante des neuen Verfahrens in mehreren Stufen durchgeführt, wobei die Zuglösung und die kochsalzhaltige wässrige Flüssigkeit bevorzugt im Gegenstrom geführt werden. Hierbei wird mindestens eine weitere Kombination von Verdampfungszone, Diffusionszone und Strippzone angewendet. So wird beispielsweise die aus der ersten Verdampfungszone austretende konzentriertere kochsalzhaltige wässrige Flüssigkeit in einer zweiten Verdampfungszone weiter aufkonzentriert. Die in einer zweiten Strippzone der zweiten Stufe anfallende verdünntere Zuglösung wird im Gegenstrom in der ersten Strippzone der ersten Stufe durch aufgenommenes Kondensat weiter verdünnt.

Ein weiterer wichtiger Aspekt für die Durchführung des neuen OD-Verfahrens und ein den Prozess kontrollierender Faktor ist der Wärmetransport. Bei der konventionellen OD wird das treibende Potential für das notwendige Dampfdruckgefälle durch osmotischen Unterschied der Lösungen bei gleicher Temperatur erzeugt. Die latente Wärme des Wasserdampfs führt beim Verdampfen zu einer Abkühlung der Feedlösung (z.B. NaCl) und bei der Kondensation zu einer Erwärmung der Zuglösung (z.B. NaOH). Außerdem trägt die Verdünnung der NaOH mit Wasser aufgrund der freiwerdenden Lösungsenthalpie ebenfalls zur Erhöhung der Temperatur bei. Dieser Wärmetransport verringert die treibende Dampfdruckdifferenz für den Stofftransport.

Weitere Aufgabe der Erfindung ist es daher eine besondere Variante des neuen Verfahrens zu finden, die das besondere Problem des Wärmetransports lösen kann.
Eine energiesparende bevorzugte Variante der vorgenannten Ausführungen des neuen Verfahrens mit zwei oder mehr gekoppelten Anordnungen aus Verdampfungszone, Diffusionszone und Strippzone ist daher dadurch gekennzeichnet, dass die aus der ersten osmotischen Destillationsanordnung aus der Verdampfungszone austretende konzentriertere kochsalzhaltige wässrige Flüssigkeit vor Einleitung in eine nachfolgende weitere osmotische Destillationsanordnung zur Einstellung der Betriebstemperatur einem Wärmeaustausch unterzogen wird.

In einer bevorzugten Variante kann unabhängig von der vorgenannten Ausführungsform die aus der ersten osmotischen Destillationsanordnung aus der Strippzone austretende Zuglösung vor Einleitung in eine nachfolgende weitere osmotische Destillationsanordnung zur Einstellung der Betriebstemperatur einem Wärmeaustausch unterzogen werden.

Die Erfindung wird nachfolgend anhand der Figuren durch die Beispiele, welche jedoch keine Beschränkung der Erfindung darstellen, näher erläutert.

Es zeigen:
- Fig. 1: einen Querschnitt durch eine erfindungsgemäße OVD (Osmotische Vakuum Destillations) -Anordnung
- Fig. 2: eine Draufsicht auf eine mögliche Verschaltung mehrerer OVD-Module mit zwischengeschalteten Wärmetauschern (Beispiel für gleichwarme Feed- und Zuglösung)
- Fig. 3: eine Draufsicht auf eine mögliche Verschaltung mehrerer OVD-Module mit zwischengeschalteten Wärmetauschern (Beispiel für kalte Feed- und warme Zuglösung)

In den Figuren haben die Bezugszeichen die nachstehende Bedeutung:
1 Zuglösungskammer (Strippzone)
2 Einlass für konzentrierte Zuglösung
3 Auslass für verdünnte Zuglösung
4 Feedkammer (Verdampfungszone)
5 Einlass für Feedlösung
6 Auslass für konzentrierte Feedlösung
7 Dampfkammer (Diffusionszone)
8 Damm (für Dränage)
9 erste Membran für den Kontakt mit Zuglösung
10 zweite Membran für den Kontakt mit Feedlösung
11, 11a Ablauf für gegebenenfalls durch die Membran 9 durchtretende Zuglösung
12, 12a Ablauf für gegebenenfalls durch die Membran 10 durchtretende Feedlösung
13 Vakuumleitung
14, 14a Wärmeübertrager
15, 15a gesamtes erfindungsgemäßes OVD-Modul
16, 16a Polypropylen-Trenn-Folie im Wärmeübertrager 14, 14a

### Beispiele

### Beispiel 1

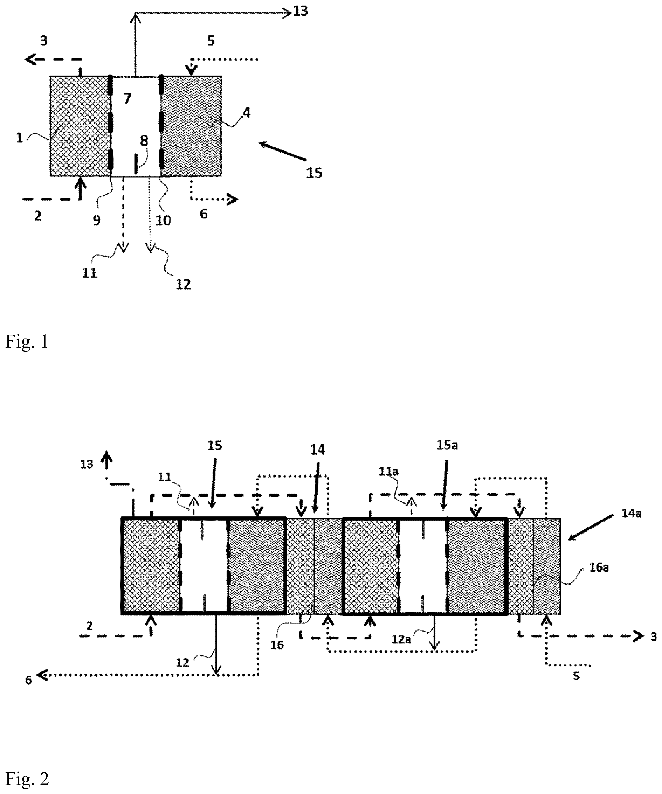

Ein Schwerpunkt der Erfindung ist die Nutzung einer neuen Anordnung zur Stofftrennung, die sog. Osmotische Vakuum Destillation (OVD-Modul), zur Verhinderung einer Flüssigkeitsvermischung im Falle der Membranbenetzung. Das Konzept der Modulanordnung ist in Fig. 1 dargestellt. Diese neue Anordnung ermöglicht die Trennung der Flüssigkeiten (Feedlösung und Zuglösung) mithilfe zweier hydrophober Membranen 9 und 10 zwischen denen ein Dampfkanal 7 angeordnet ist, der auch für die Abführung evtl. eingedrungener Flüssigkeiten sorgt.

Zum Prozessstart wird der Systemdruck mit einer Vakuumpumpe über die Leitung 13 auf einen Druck von 20 mbar (20 hPa) gesenkt. Hierdurch kann der Stofftransport deutlich verbessert werden, da der Transport von Wasserdampf durch die Membranporen und, in der Dampfkammer 7, durch etwaige Inertgase behindert werden kann. Feedlösung (NaCl 10 Gew.- %, Temperatur 50°C, Wasserdampfpartialdruck 110 mbar) wird über den Einlass 5 in die Feedkammer 4 eingelassen. Über die Membran 10 mit der aktiven Fläche von 0,5 m² wird Wasserdampf an die Dampfkammer 7 (Diffusionszone) abgegeben. Der Dampfflux durch die Membran 10 beträgt 3 kg/h·m². Die konzentrierte Feedlösung (NaCl 10,1 Gew.-%, Temperatur 41°C, Wasserdampfpartialdruck 70 mbar) verlässt die Feedkammer 4 über den Auslass 6. Die am Einlass 2 eintretende konzentrierte Zuglösung (NaOH 30 Gew.- %, Temperatur 50°C, Wasserdampfpartialdruck 64 mbar) nimmt Wasserdampf auf, der durch die Membrane 9 in die Zuglösungskammer 1 (Strippzone) eintritt. Der Dampfflux durch die Membran 9 beträgt ebenfalls 3 kg/h·m². Die verdünnte Zuglösung (NaOH 29,6 Gew.-%, Temperatur 60°C, Wasserdampfpartialdruck 100 mbar) verlässt die Zuglösungskammer 1 über den Auslass 3. Ein Damm 8 sorgt in dem Dampfkanal 7 zusätzlich dafür, dass eine Vermischung von etwaiger durch die Membranen 9 bzw. 10 durchgetretener Feed- und Zuglösung nicht möglich ist. Diese werden über die Leitungen 11 und 12 getrennt abgeführt und gegebenenfalls zurückgeführt.

Ein weiterer Vorteil der vorliegenden Anordnung liegt darin, dass zwei unterschiedlich beschaffene Membranen 9 und 10 je nach Anforderungen an Feed- und Zuglösung verwendet werden können. Vorteilhafterweise kann eine Membran 9 mit folgenden Eigenschaften eingesetzt werden:
- aktive Schicht: PTFE, Schichtdicke ca. 25 µm, Porengröße 0,2 µm, Wassereindringdruck 3,5 bar;
- Stützschicht: PP, Schichtdicke ca. 200 µm.

Die latente Wärme des Wasserdampfs kühlt die Feedlösung 6 aufgrund der Verdampfung ab und erwärmt die Zuglösung 3 aufgrund der Kondensation. Dieser Wärmetransport verringert jedoch die treibende Dampfdruckdifferenz für den Massentransport.

### Beispiel 2

Fig. 2 stellt beispielhaft eine Anordnung mit zwei gekoppelten Modulen 15, 15 a dar, die für eine 50°C konzentrierte Zuglösung und eine 50°C dünne Feedlösung angewendet wird. Die Anordnung besteht aus zwei Membranmodulen 15, 15 a und zwei Wärmeübertragern 14, 14 a. Die Wärmeübertrager 14, 14 a sind als rahmenförmige Einsätze gestaltet, die Zu- und Ableitungen für die Flüssigkeiten (Feed- und Zuglösung) aufweisen, und die seitlich durch die Module 15, 15 a bzw. durch eine Endplatte geschlossen sind. Auf je einen der Rahmen der Wärmeübertrager 14, 14 a werden dünne (ca. 25 µm) Polypropylen-Folien 16 bzw. 16 a (Fig. 2) aufgebracht, welche als Wärmeübertragerfläche dienen. Die auf diese Weise entstehenden Wärmeübertrager 14, 14 a werden mit den OVD-Membranmodulen 15, 15a abwechselnd zu einem Block geformt. Das innovative Konzept, alle Funktionen in einem Block zu realisieren, bietet Vorteile hinsichtlich der Vermeidung von zusätzlichen externen Wärmetauschern und einer Rückverrohrung. In den Wärmeübertragern 14, 14a kommt es zum Wärmetausch zwischen der jeweiligen abgereicherten Zug- und angereicherter Feedlösung (Wärmerückgewinnung).

Beide Lösungen, Zug- 2 und Feedlösung 5 werden im Gegenstrom geleitet. Der Systemdruck wird zum Prozessstart auf 20 mbar gesenkt. Die Zuglösung (NaOH, 30,00 Gew.- %, Temperatur 50 °C, 100 kg/h) tritt über Einlass 2 in das OVD-Modul 15 ein. Die Feedlösung (NaCl, 9,85 Gew.- %, Temperatur 50 °C, 101,5 kg/h) tritt über Einlass 5 in einen Wärmeübertrager 14a. Die Zuglösung verlässt Modul 15 und wird nach Durchgang durch Wärmetauscher 14 in die Zugkammer von Modul 15 a geleitet. Aus Modul 15 a austretende weiter abgereicherte Zuglösung wird nach Durchgang durch den weiteren Wärmetauscher 14 a abgeleitet (Leitung 3). Um einen optimalen Stoffaustausch zwischen Feed- und Zuglösung zu erreichen werden eine Vielzahl der in diesem Beispiel 2 genannten Zweimodulanordnungen hintereinander geschaltet, wobei die Zahl der verwendeten Zweimodulanordnungen in der Größenordnung von 20 bei einer Steigerung der Konzentration der Feedlösung von 100 kg/h von 7 Gew.- % auf 20 Gew.- % liegt. Die prozessrelevanten Parameter können der Tabelle 1 und 2 entnommen werden.

**Tabelle 1**

| Parameter Membranmodule | | | | |
|---|---|---|---|---|
| | Modul 15 | | Modul 15 a | |
| | NaOH | NaCl | NaOH | NaCl |
| Flux [kg/hm²] | 3 | 3 | 3 | 3 |
| Membranfläche [m²] | 0,5 | 0,5 | 0,5 | 0,5 |
| Tein [°C] | 50,0 | 56,0 | 53,0 | 58,5 |
| Taus [°C] | 59,9 | 47,4 | 62,5 | 50,0 |
| Massenstrom_ein [kg/h] | 100,0 | 100,0 | 101,5 | 101,5 |
| Massenstrom_aus [kg/h] | 101,5 | 98,5 | 103,0 | 100,0 |
| Konzentration_ein [Gew. %] | 30,00 | 10,00 | 29,56 | 9,85 |
| Konzentration_aus [Gew. %] | 29,56 | 10,15 | 29,13 | 10,00 |
| Dampfdruck_ein [mbar] | 63 | 140 | 68 | 165 |
| Dampfdruck_aus [mbar] | 100 | 95 | 120 | 108 |
| Cp [J/kgK] | 3590 | 4180 | 3590 | 4180 |

**Tabelle 2**

| Parameter Wärmeübertrager | | | | |
|---|---|---|---|---|
| | Wärmeübertrager 14 | | Wärmeübertrager 14a | |
| | NaOH | NaCl | NaOH | NaCl |
| Fläche [m²] | 0,25 | | 0,4 | |
| k [W/m²K] | 800 | | 800 | |
| Tein [°C] | 59,9 | 50,0 | 62,6 | 50,0 |
| Taus [°C] | 53,0 | 56,0 | 52,6 | 58,5 |

### Beispiel 3

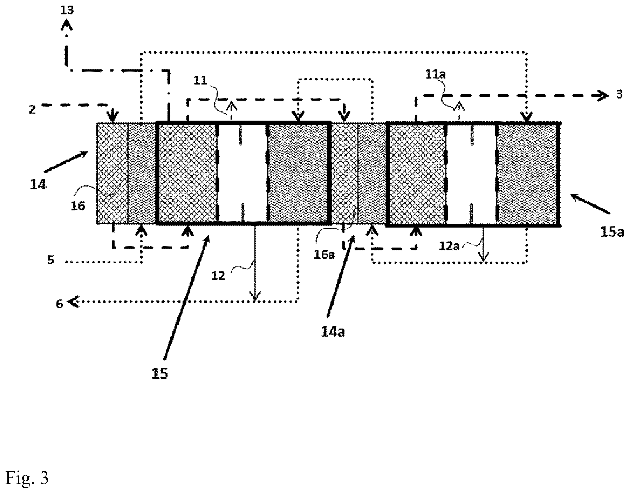

Der modulare Aufbau ist sehr flexibel und kann durch Änderung der Reihenfolge für Wärmetauscher- und Membranblöcke leicht gewechselt werden. Fig. 3 stellt beispielweise eine Abwandlung der Anordnung nach Beispiel 2 dar, die für eine warme konzentrierte Zuglösung (NaOH, 30 Gew.- %, Temperatur 70°C, 100 kg/h) und eine dünne kalte Feedlösung (NaCl, 9,85 Gew.- %, Temperatur 40°C, 101,5 kg/h) konzipiert ist. In diesem Fall werden beide Lösungen 2 und 5 zunächst in einem, dem ersten Modul 15 vorgeschalteten Wärmeübertrager 14 zum Wärmeaustausch zugeführt. Die auf 60°C aufgewärmte Feedlösung fließt in das Modul 15a. Die auf 50°C abgekühlte NaOH strömt in das Modul 15. Danach werden beide Lösungen analog dem Beispiel 2 im Gegenstrom durch die Module 15, 15a und den Wärmetauscher 14 geleitet.

## Patentansprüche

1. Osmotisches Destillationsverfahren zum Konzentrieren einer kochsalzhaltigen wässrigen Flüssigkeit, wobei die Flüssigkeit eine Konzentration von bis zu 20 Gew.-% Kochsalz, bevorzugt 2 bis 18 Gew.-% Kochsalz aufweist, das wenigstens die folgenden Schritte aufweist,
a) gegebenenfalls Vorreinigung der Flüssigkeit von organischen Nebenbestandteilen, insbesondere bis zu einen Gesamtgehalt der organischen Nebenbestandteile von 20 ppm,
b) Einleitung der gereinigten Flüssigkeit in eine erste Zone als Verdampfungszone (4), die von einer an diese erste Zone (4) angrenzenden Diffusionszone (7) durch eine wasserdampfdurchlässige hydrophobe erste Membran (10) getrennt ist,
c) Diffusion von Wasserdampf aus der kochsalzhaltigen Flüssigkeit durch die Membrane (10) in die Diffusionszone (7),
d) weitere Diffusion von Wasserdampf aus der Diffusionszone (7) durch eine zweite wasserdampfdurchlässige hydrophobe Membran (9) in eine an die Diffusionszone (7) angrenzende Strippzone (1) und Aufnahme des Wasserdampf in eine Zuglösung, die in der Strippzone (1) kontinuierlich ausgetauscht wird.

2. Verfahren nach Anspruch 1, **dadurch gekennzeichnet, dass** als Zuglösung eine konzentrierte Alkalilauge, insbesondere konzentrierte Natronlauge eingesetzt wird, bevorzugt mit einer Konzentration an Alkalihydroxid, besonders bevorzugt an NaOH von 10 Gew.-% bis 50 Gew.-%, bevorzugt von 15 Gew.-% bis 35 Gew.-%, besonders bevorzugt 20 Gew.-% bis 33 Gew.-%.

3. Verfahren nach einem der Ansprüche 1 oder 2, **dadurch gekennzeichnet, dass** die Diffusionszone (7) eine Dränage (11, 8, 12) zur Abführung von Flüssigkeit aufweist und, insbesondere mit störende Anionen, insbesondere bevorzugt mit Chloridanionen belastetes Kondensat oder von gegebenenfalls durch die Membranen (9) und (10) in die Diffusionszone (7) durchtretender Flüssigkeit oder Zuglösung aus der Diffusionszone (7) abgeführt wird.

4. Verfahren nach einem der Ansprüche 1 bis 3, **dadurch gekennzeichnet, dass** die kochsalzhaltige wässrige Flüssigkeit ein Produktionsabwasser aus einem Verfahren zur Herstellung von Polymeren, insbesondere zur Herstellung von Polycarbonat oder Polyurethanvorprodukten ist.

5. Verfahren nach der einem der Ansprüche 1 bis 4, **dadurch gekennzeichnet dass** die erste (10) und die zweite Membran (9) unabhängig voneinander auf einem hydrophoben Polymeren basieren, insbesondere auf Polypropylen und /oder Polytetrafluorethylen (PTFE).

6. Verfahren nach einem der Ansprüche 1 ist 5, **dadurch gekennzeichnet, dass** die verschiedenen Zonen: Verdampfungszone (4), Diffusionszone (7), Strippzone (1) unabhängig voneinander bei Normaldruck oder vermindertem Druck gehalten werden, insbesondere bei einem Druck von 10 bis 600 mbar.

7. Verfahren nach einem der Ansprüche 1 bis 6, **dadurch gekennzeichnet, dass** die verschiedenen Zonen: Verdampfungszone (4), Diffusionszone (7), Strippzone (1) unabhängig voneinander bei einer Temperatur von 10 bis 80°C besonders bevorzugt von 20 bis 60°C gehalten werden.

8. Verfahren nach Anspruch 7, **dadurch gekennzeichnet, dass** die Temperatur in der Verdampfungszone (4) größer ist als in den angrenzenden Zonen, der Diffusionszone (7) und der Strippzone (1).

9. Verfahren nach einem der Ansprüche 1 bis 8, **dadurch gekennzeichnet, dass** die kochsalzhaltige Flüssigkeit in der Verdampfungszone (4) und die Zuglösung in der Stripzone (1) zueinander im Gegenstrom an den jeweiligen Membranen (9) bzw. (10) vorbeigeführt werden.

10. Verfahren nach einem der Ansprüche 1 ist 9, **dadurch gekennzeichnet, dass** die kochsalzhaltige wässrige Flüssigkeit im Bereich der Verdampfungszone (4) turbulent strömt.

11. Verfahren nach einem der Ansprüche 1 bis 10, **dadurch gekennzeichnet, dass** die von den Prozessflüssigkeiten berührten Einbauten in den Zonen: Verdampfungszone (4), Diffusionszone (7), Strippzone (1) unter einander mittels stoffschlüssiger Verbindung, insbesondere durch Reibschweißen oder Laserschweißen besonders bevorzugt durch Reibschweißen miteinander verbunden sind insbesondere ohne Einsatz von Klebstoffen oder Haftstoffen.

12. Verfahren nach einem der Ansprüche 1 bis 11, **dadurch gekennzeichnet, dass** die Zuglösung Alkalilauge ist und aus einem gekoppelten Elektrolyseprozess zur Elektrolyse von Alkalichlorid entnommen wird und nach Aufnahme des Wasserdampfs in der Strippzone (1) in einen gekoppelten chemischen Produktionsprozess, insbesondere zur Herstellung von Polymeren abgegeben wird.

13. Verfahren nach einem der Ansprüche 1 bis 12, **dadurch gekennzeichnet, dass** die kochsalzhaltige wässrige Flüssigkeit aus einem gekoppelten chemischen Produktionsprozess, insbesondere einem Prozess zur Herstellung von Polymeren entnommen wird und nach Aufkonzentrierung in der Verdampfungszone (4) in einen gekoppelten Elektrolyseprozess zur Elektrolyse von Alkalichlorid abgegeben wird.

14. Verfahren nach einem der Ansprüche 1 bis 13, **dadurch gekennzeichnet, dass** die Verfahrensschritte b), c) und d) in mehreren Stufen durchgeführt werden wobei mindestens eine weitere Kombination von Verdampfungszone (4), Diffusionszone (7), Strippzone (1) angewendet wird.

15. Verfahren nach einem der Ansprüche 1 bis 14, **dadurch gekennzeichnet, dass** die aus der ersten Verdampfungszone (4) in einer ersten Anordnung aus Verdampfungszone (4), Diffusionszone (7), Strippzone (1) austretende Flüssigkeit in mindestens einer nachgeschalteten weiteren Anordnung aus Verdampfungszone (4), Diffusionszone (7), Strippzone (1) erneut den Verfahrensschritten b) und c) unterzogen wird und die aus einer zweiten Strippzone in mindestens einer nachgeschalteten Anordnung aus Verdampfungszone (4), Diffusionszone (7), Strippzone (1) austretende verdünnte Zuglösung zur Durchführung von Schritt d) in der ersten Anordnung aus Verdampfungszone (4), Diffusionszone (7), Strippzone (1) verwendet wird.

16. Verfahren nach Anspruch 15, **dadurch gekennzeichnet, dass** die aus der ersten osmotischen Destillationsanordnung aus der Verdampfungszone (4) austretende konzentriertere kochsalzhaltige wässrige Flüssigkeit vor Einleitung in eine nachfolgende weitere osmotische Destillationsanordnung zur Einstellung der Betriebstemperatur einem Wärmeaustausch unterzogen wird.

17. Verfahren nach Anspruch 15 oder 16, **dadurch gekennzeichnet, dass** die aus der ersten osmotischen Destillationsanordnung aus der Strippzone (1) austretende Zuglösung vor Einleitung in eine nachfolgende weitere osmotische Destillationsanordnung zur Einstellung der Betriebstemperatur einem Wärmeaustausch unterzogen wird.

## Claims

1. Osmotic distillation process for concentrating an aqueous liquid containing sodium chloride, where the liquid has a concentration of up to 20% by weight of sodium chloride, preferably from 2 to 18% by weight of sodium chloride, which comprises at least the following steps,
a) optionally prepurification of the liquid to remove organic secondary constituents, in particular down to a total content of the organic secondary constituents of 20 ppm,
b) introduction of the purified liquid into a first zone as evaporation zone (4) which is separated from a diffusion zone (7) adjoining this first zone (4) by a hydrophobic first membrane (10) which is permeable to water vapor,
c) diffusion of water vapor from the liquid containing sodium chloride through the membrane (10) into the diffusion zone (7),
d) further diffusion of water vapor from the diffusion zone (7) through a second hydrophobic membrane (9) which is permeable to water vapor into a stripping zone (1) adjoining the diffusion zone (7) and absorption of the water vapor in a draw solution which is continuously replaced in the stripping zone (1).

2. Process according to Claim 1, **characterized in that** a concentrated alkaline metal hydroxide solution, in particular concentrated sodium hydroxide solution, preferably having a concentration of alkaline metal hydroxide, particularly preferably of NaOH, of from 10% by weight to 50% by weight, preferably from 15% by weight to 35% by weight, particularly preferably from 20% by weight to 33% by weight, is used as draw solution.

3. Process according to either of Claims 1 and 2, **characterized in that** the diffusion zone (7) has drainage (11, 8, 12) for discharging liquid and condensate, in particular laden with interfering anions, particularly preferably with chloride anions, or of any liquid passing through the membranes (9) and (10) into the diffusion zone (7) or draw solution is discharged from the diffusion zone (7).

4. Process according to any of Claims 1 to 3, **characterized in that** the aqueous liquid containing sodium chloride is production wastewater from a process for preparing polymers, in particular for preparing polycarbonate or polyurethane intermediates.

5. Process according to any of Claims 1 to 4, **characterized in that** the first membrane (10) and the second membrane (9) are, independently of one another, based on a hydrophobic polymer, in particular on polypropylene and/or polytetrafluoroethylene (PTFE).

6. Process according to any of Claims 1 to 5, **characterized in that** the different zones: evaporation zone (4), diffusion zone (7), stripping zone (1) are maintained independently of one another at atmospheric pressure or reduced pressure, in particular at a pressure of from 10 to 600 mbar.

7. Process according to any of Claims 1 to 6, **characterized in that** the different zones: evaporation zone (4), diffusion zone (7), stripping zone (1) are, independently of one another, maintained at a temperature of from 10 to 80°C, particularly preferably from 20 to 60°C.

8. Process according to Claim 7, **characterized in that** the temperature in the evaporation zone (4) is greater than in the adjoining zones, namely the diffusion zone (7) and the stripping zone (1).

9. Process according to any of Claims 1 to 8, **characterized in that** the liquid containing sodium chloride in the evaporation zone (4) and the draw solution in the stripping zone (1) are conveyed in countercurrent relative to one another past the respective membranes (9) and (10).

10. Process according to any of Claims 1 to 9, **characterized in that** the aqueous liquid containing sodium chloride has turbulent flow in the region of the evaporation zone (4).

11. Process according to any of Claims 1 to 10, **characterized in that** the internals which are contacted by the process liquids in the zones: evaporation zone (4), diffusion zone (7), stripping zone (1) have been joined to one another by means of fusion bonding, in particular by frictional welding or laser welding, particularly preferably by frictional welding, in particular without use of adhesives or bonding agents.

12. Process according to any of Claims 1 to 11, **characterized in that** the draw solution is alkaline metal hydroxide solution and is taken from a coupled electrolysis process for the electrolysis of alkaline metal chloride and, after uptake of water vapor in the stripping zone (1), is introduced into a coupled chemical production process, in particular for preparing polymers.

13. Process according to any of Claims 1 to 12, **characterized in that** the aqueous liquid containing sodium chloride is taken from a coupled chemical production process, in particular a process for preparing polymers, and, after having been concentrated in the evaporation zone (4), is introduced into a coupled electrolysis process for the electrolysis of alkaline metal chloride.

14. Process according to any of Claims 1 to 13, **characterized in that** the process steps b), c) and d) are carried out in a plurality of stages, with at least one further combination of evaporation zone (4), diffusion zone (7), stripping zone (1) being employed.

15. Process according to any of Claims 1 to 14, **characterized in that** the liquid exiting from the first evaporation zone (4) in a first arrangement made up of evaporation zone (4), diffusion zone (7), stripping zone (1) is again subjected to process steps b) and c) in at least one downstream further arrangement made up of evaporation zone (4), diffusion zone (7), stripping zone (1) and the diluted draw solution exiting from a second stripping zone in at least one downstream arrangement made up of evaporation zone (4), diffusion zone (7), stripping zone (1) is used for carrying out step d) in the first arrangement made up of evaporation zone (4), diffusion zone (7), stripping zone (1).

16. Process according to Claim 15, **characterized in that** the concentrated aqueous liquid containing sodium chloride exiting from the evaporation zone (4) of the first osmotic distillation arrangement is subjected to heat exchange in order to set the operating temperature before introduction into a subsequent further osmotic distillation arrangement.

17. Process according to Claim 15 or 16, **characterized in that** the draw solution exiting from the stripping zone (1) of the first osmotic distillation arrangement is subjected to heat exchange in order to set the operating temperature before introduction into a subsequent further osmotic distillation arrangement.

## Revendications

1. Procédé de distillation osmotique pour la concentration d'un liquide aqueux contenant du sel, le liquide présentant une concentration de jusqu'à 20% en poids de sel, préférablement de 2 jusqu'à 18% en poids de sel, qui présente au moins les étapes suivantes,
a) éventuellement prépurification du liquide de constituants minoritaires organiques, en particulier jusqu'à une teneur totale des constituants minoritaires organiques de 20 ppm,
b) introduction du liquide purifié dans une première zone en tant que zone (4) d'évaporation, qui est séparée d'une zone (7) de diffusion adjacente à cette première zone (4) par une première membrane (10) hydrophobe perméable à la vapeur d'eau,
c) diffusion de vapeur d'eau provenant du liquide contenant du sel à travers la membrane (10) dans la zone (7) de diffusion,
d) autre diffusion de vapeur d'eau provenant de la zone (7) de diffusion à travers une deuxième membrane (9) hydrophobe perméable à la vapeur d'eau dans une zone (1) d'extraction adjacente à la zone (7) de diffusion et absorption de la vapeur d'eau dans une solution d'extraction qui est échangée de manière continue dans la zone (1) d'extraction.

2. Procédé selon la revendication 1, **caractérisé en ce qu'**une lessive alcaline concentrée, en particulier une lessive de soude caustique concentrée est utilisée en tant que solution d'extraction, préférablement présentant une concentration en hydroxyde alcalin, particulièrement préférablement en NaOH, de 10% en poids jusqu'à 50% en poids, préférablement de 15% en poids jusqu'à 35% en poids, particulièrement préférablement de 20% en poids jusqu'à 33% en poids.

3. Procédé selon l'une quelconque des revendications 1 ou 2, **caractérisé en ce que** la zone (7) de diffusion présente un drainage (11, 8, 12) pour l'évacuation de liquide et du condensat chargé, en particulier par des anions perturbants, en particulier préférablement par des anions chlorure, ou éventuellement du liquide ou de la solution d'extraction passant à travers les membranes (9) et (10) dans la zone (7) de diffusion est évacué(e) à partir de la zone de diffusion (7).

4. Procédé selon l'une quelconque des revendications 1 à 3, **caractérisé en ce que** le liquide aqueux contenant du sel est un effluent de production issu d'un procédé pour la préparation de polymères, en particulier pour la préparation de précurseurs de polycarbonate ou de polyuréthane.

5. Procédé selon l'une quelconque des revendications 1 à 4, **caractérisé en ce que** la première (10) et la deuxième (9) membrane, indépendamment l'une de l'autre, sont à base d'un polymère hydrophobe, en particulier à base de polypropylène et/ou de polytétrafluoroéthylène (PTFE) .

6. Procédé selon l'une quelconque des revendications 1 à 5, **caractérisé en ce que** les différentes zones : zone (4) d'évaporation, zone (7) de diffusion, zone (1) d'extraction, sont maintenues indépendamment les unes des autres à pression atmosphérique ou à pression réduite, en particulier à une pression de 10 jusqu'à 600 mbars.

7. Procédé selon l'une quelconque des revendications 1 à 6, **caractérisé en ce que** les différentes zones : zone (4) d'évaporation, zone (7) de diffusion, zone (1) d'extraction, sont maintenues indépendamment les unes des autres à une température de 10 jusqu'à 80°C, particulièrement préférablement de 20 jusqu'à 60°C.

8. Procédé selon la revendication 7, **caractérisé en ce que** la température dans la zone (4) d'évaporation est supérieure à celle des zones adjacentes, la zone (7) de diffusion et la zone (1) d'extraction.

9. Procédé selon l'une quelconque des revendications 1 à 8, **caractérisé en ce que** le liquide contenant du sel dans la zone (4) d'évaporation et la solution d'extraction dans la zone (1) d'extraction passent en sens contraire l'un par rapport à l'autre au niveau des membranes respectives (9) et (10).

10. Procédé selon l'une quelconque des revendications 1 à 9, **caractérisé en ce que** le liquide aqueux contenant du sel s'écoule de manière turbulente au niveau de la zone (4) d'évaporation.

11. Procédé selon l'une quelconque des revendications 1 à 10, **caractérisé en ce que** les structures internes en contact avec les liquides de procédé dans les zones : zone (4) d'évaporation, zone (7) de diffusion, zone (1) d'extraction, ont été assemblées les unes aux autres par un assemblage par continuité de matière, en particulier par soudure par friction ou par soudure laser, particulièrement préférablement par soudure par friction, en particulier sans l'application de colles ou d'adhésifs.

12. Procédé selon l'une quelconque des revendications 1 à 11, **caractérisé en ce que** la solution d'extraction est une lessive alcaline et est prélevée d'un procédé d'électrolyse couplé pour l'électrolyse de chlorure alcalin et, après absorption de la vapeur d'eau dans la zone (1) d'extraction, est introduite dans un procédé de production chimique couplé, en particulier pour la préparation de polymères.

13. Procédé selon l'une quelconque des revendications 1 à 12, **caractérisé en ce que** le liquide aqueux contenant du sel est prélevé d'un procédé de production chimique couplé, en particulier d'un procédé de préparation de polymères et, après concentration dans la zone (4) d'évaporation, est introduite dans un procédé d'électrolyse couplé pour l'électrolyse de chlorure alcalin.

14. Procédé selon l'une quelconque des revendications 1 à 13, **caractérisé en ce que** les étapes de procédé b), c) et d) sont mises en oeuvre en plusieurs étapes, au moins une autre combinaison d'une zone (4) d'évaporation, d'une zone (7) de diffusion et d'une zone (1) d'extraction étant utilisée.

15. Procédé selon l'une quelconque des revendications 1 à 14, **caractérisé en ce que** le liquide sortant de la première zone (4) d'évaporation d'un premier dispositif composé d'une zone (4) d'évaporation, d'une zone (7) de diffusion, d'une zone (1) d'extraction, est soumis à nouveau aux étapes de procédé b) et c) dans au moins un autre dispositif composé d'une zone (4) d'évaporation, d'une zone (7) de diffusion, d'une zone (1) d'extraction monté en aval et la solution d'extraction diluée sortant d'une deuxième zone d'extraction dans au moins un dispositif composé d'une zone (4) d'évaporation, d'une zone (7) de diffusion, d'une zone (1) d'extraction monté en aval, est utilisée pour la mise en oeuvre de l'étape d) dans le premier dispositif composé d'une zone (4) d'évaporation, d'une zone (7) de diffusion, d'une zone (1) d'extraction.

16. Procédé selon la revendication 15, **caractérisé en ce que** le liquide aqueux contenant du sel, concentré, sortant de la zone d'évaporation (4) du premier dispositif de distillation osmotique est soumis à un échange thermique pour l'ajustement de la température de fonctionnement avant l'introduction dans un autre dispositif de distillation osmotique suivant.

17. Procédé selon la revendication 15 ou 16, **caractérisé en ce que** la solution d'extraction sortant de la zone (1) d'extraction du premier dispositif de distillation osmotique est soumise à un échange thermique pour l'ajustement de la température de fonctionnement avant l'introduction dans un autre dispositif de distillation osmotique suivant.
